(19) Europäisches Patentamt
European Patent Office
Office européen des brevets

(11) **EP 1 395 001 B1**

(12) **EUROPEAN PATENT SPECIFICATION**

(45) Date of publication and mention
of the grant of the patent:
**31.01.2007 Bulletin 2007/05**

(51) Int Cl.:
*H04L 12/56* (2006.01)

(21) Application number: **03004383.0**

(22) Date of filing: **03.03.2003**

(54) **Hierarchical mobile packet communication network and method of communication thereof**

Hierarchisches Paketfunkkommunikationsnetz und Kommunikationsverfahren dafür

Réseau mobile hierarchique de communication par paquets et procédé de communication correspondant

(84) Designated Contracting States:
**DE FR GB**

(30) Priority: **20.08.2002 CN 02130465**

(43) Date of publication of application:
**03.03.2004 Bulletin 2004/10**

(73) Proprietors:
• **Hitachi, Ltd.**
**Chiyoda-ku**
**Tokyo (JP)**
• **Tsinghua University**
**Tsinghua University Beijing 100084 (CN)**

(72) Inventors:
• **Onwuka, E.N**
**Tsinghua University,**
**Beijing, 100084 (CN)**
• **Niu, Z.S**
**Tsinghua University,**
**Beijing, 100084 (CN)**

• **Yano, Masashi,**
**Hitachi, Ltd.,**
**Intell.Prop.Grp.**
**Chiyoda-ku,**
**Tokyo 100-8220 (JP)**
• **Tanabe, Shiro,**
**Hitachi, Ltd.,**
**Intell.Prop.Grp.**
**Chiyoda-ku,**
**Tokyo 100-8220 (JP)**

(74) Representative: **Beetz & Partner**
**Steinsdorfstrasse 10**
**80538 München (DE)**

(56) References cited:
**WO-A-01/69948           US-A- 5 539 922**

• **HINDEL R ET AL: "An IPv6 Aggregatable Global Unicast Address Format" THE INTERNET SOCIETY, NETWORK WORKING GROUP, July 1998 (1998-07), XP002187311 Retrieved from the Internet: <URL:http://www.faqs.org/ rfcs/rfc2374.html > [retrieved on 2002-01-14]**

**Description**

BACKGROUND OF THE INVENTION

The present invention relates generally to a mobile communication network, and in particular, to a hierarchical mobile packet communication network and a method of communication thereof, which can be IPv6-based.

Trends in mobile/wireless communications in recent years have shown that the number of subscribers to mobile communication is limited only by available technology. Due to the robust and flexible properties of the Internet Protocol (IP), it is currently being defined as the basis for future mobile communications. The fear of address depletion in the IPv4 is already arrested by IPv6. In order to meet the demands of real-time applications and the expectations of future wireless users for service level quality similar to that of wire-line users, the IETF (Internet Engineering Task Force) is currently specifying and reviewing IP Mobility protocols. The most popular among the many IP mobility protocols are the MIP and MIPv6, which are specified by the IETF for the IP versions 4 and 6 respectively. These protocols, and in particular Mobile IPv6 is prone with performance and scalability problems. In the effort to solve these problems many micro-mobility proposals have been made in literature, but they usually either tradeoff performance for scalability or vice versa.

The current effort of merging Internet Protocols (IP) technologies and mobile telecommunications technologies in wireless communications with an all-IP core has thrown a serious challenge to the research community. As a result, both individuals and groups from universities and companies, and different categories of standards bodies are working out solutions towards this new era of mobile data communications, which will be built on IP foundations. It is anticipated that all-IP wireless networks will be the dawn of the much talked about ubiquitous mobile telecommunications. Roaming users will finally have access to integrated data, voice, and multimedia services of the Internet through diverse wireless IP addressable terminals.

The major efforts in this area of research activities are the IETF Mobile IP (MIP) defined in the IPv4 and the Mobile IPv6 respectively. They are exposed in "IP Mobility Support," IETF RFC 2002, Oct. 1996, by C. Perkins and "Mobility support in IPv6," Internet Draft, draft-ietf-mobileip-ipv6-15.txt, July 2001, by D.B. Johnson and C. Perkins respectively. These two solutions are the same in principle except for the integration of some mobility features in the IPv6. MIP is built on the robustness, cost effectiveness, application flexibility, and transparency of IP technologies. Therefore it gave rise to a simple, robust global mobility solution, but among other deficiencies it is not scalable. One quality that is required in the future mobile communication networks is scalability i.e., ability to maintain performance with increase in the number of mobile terminals. Other problems with MIP and MIPv6 are that they do not support fast handoffs, they have little support for QoS (Quality of Serice). Additionally, In order to solve the problem of triangle routing, MIPv6 take the introduction of destination options and the fact that mobile hosts (MHs) can update correspondent hosts (CHs) with location information. Sending binding updates (BUs) to CHs has the advantage of optimal routing but introduces increased mobility related signaling in the network. So there is a tradeoff between routing and binding update signaling.

Much work has been does in literature to address some of the problems cited above. These works try to use the same general mechanism to address the problems of handoff latency, spurious signaling in the Internet backbone, and make provisions for QoS implementation. This general idea is that of micro-mobility management or localized mobility management (LMM) i.e. managing mobility in a local area. In this way the mobility related signaling for a given MH is confined to the local area where the MH is currently roaming, thereby reducing the frequency with which signaling information cross the Internet. Also with reduced signaling distance, latency due to handoff related operations is reduced and handoff is then faster. Again, it is easier to implement QoS related network resource reservation, at least up to the local mobility area.

The general mobility problem can be regarded as an addressing and routing problem. This is because in the traditional IP network, packet routing is address dependent. A host IP address consists of two parts: the network identification part and host identification part. A packet destined to an Internet host is routed to the network where the host is attached and onwards to the host, with reference to "Internetworking with TCP/IP", Prentice-Hall International, Inc. 1995, pp. 113-115, by D.E Comer. But in the fixed Internet, all hosts are stationery and are therefore always found in their home networks. When a host moves away from its home network, it is impossible to route packets to it without additional mobility related operations hence the need for mobility management. The IP address is also a dual-purpose identifier: it serves as both terminal identifier and location identifier, moreover, higher layers in the protocol are aware of this format and use it in their processing operations. This is a very optimal use of the address, but this does not work well with mobile hosts.

As a result, the research community adopted the general idea of assigning two identifiers to a mobile terminal: one as terminal identifier, to be recognized by higher layer protocols, and the other as location identifier to be used for routing only, with reference to "An Efficient Location and Routing Scheme for Mobile Computing Environment," IEEE/ACM Trans. on Networking, vol. 13. pp. 868-879, June 1995, by G. Cho and L.F Marshall. This solution allows a MH to remain connected even when it moves away from its home network, but the management is cumbersome and mobility is not seamless. For example, the paper "IP Mobility Support," IETF RFC 2002, Oct. 1996, by C. Perkins introduces the idea of mobility management entities in the form of home agent (HA) and foreign agent (FA) to help in managing location information and packet routing for the MH and uses home address and care-of-address (COA) as terminal identifier and location identifier respectively. Therefore when a MH moves into a foreign network, in order to maintain connectivity, it has to obtain a COA in the new network and register with a FA that will manage mobility issues for it while it roams in this network. It also registers with its HA informing it of the COA so that the HA will redirect packets that arrive for it in its home network to the COA. In this way, mobility is transparent to correspondent nodes and higher layer protocols. This solution is good because mobility related signaling is low and higher protocols need not be modified, but the routing cost is high and non-optimal especially when the MH is far from home and communicating with a host in the same subnet with it. In this scenario, all the packets will first be sent to the home network of the MH only to be tunneled back to the subnet before the MH can receive them. Again, if the MH is moving into a foreign network in the middle of a session (handoff), the time needed to obtain and communicate location information to the HA for proper redirection of traffic flow, generally called handoff latency, is unavoidably so high that there will be a definite break in communication, thereby rendering the user perceived quality of service low.

There is now a great interest in the networking community to introduce quality of service (QoS) in the Internet, but using the IETF Mobile IP (MIP) defined in the IPv4 and the Mobile IPv6, it will be difficult for MHs to benefit from such services. This is because frequent change of COAs make reservation of network resource difficult. The use of two identifiers for single MH leads to address depletion in the IPv4 systems. Also, from its method of operation, if many terminals becomes mobile as is very likely to be the case, mobility related signaling will significantly increase such that it will form a major part of Internet traffic, this solution does not support scalability.

MIPv6 is basically similar to MIP, but the high cost of routing is reduced by way of more location information distribution. Here CHs can also be updated with MH location information, so that a CH has binding update (BU) cache for all the MHs it communicates with and therefore can route packets directly to them. Only when a CH does not have a BU cache for a given MH that it routes the packets through the HA. This functionality is supported by the newly defined destination options in the IPv6. Also the problem of address depletion is solved in MIPv6. However, MIPv6 solves the problem of non-optimal routing but introduces high signaling cost per MH. Consider a situation where a MH has many CHs, then for every change of subnet it will have to send location update signals to all of them plus its HA. Also consider a situation where there are many such MHs in a network, this protocol will certainly limit the growth of the system.

Micro-mobility approach has also been used, there are two main classes of approach in this area: hierarchical-MIP-variant and hierarchical-host-based-routing-variant (HBR-variant). These two classes make the common effort of shortening signal path when a MH moves far from home, but differ in their method of address management and routing. For example, in IPv4 systems, examples of hierarchical-HBR micro-mobility protocols are exposed in "IP Micro-mobility support using HAWAII," Internet Draft, draft-ietf-mobiileiphawaii-00.txt, June 1999, by R. Ramjee et al., and "Design, Implementation, and Evaluation of Cellular IP," IEEE Pers. Comm., Aug. 2000, pp. 42-49, by A. T. Campbell et al. Location information is placed in host-based caches in selected nodes within a domain. Upstream packets are routed hop-by-hop to the gateway, and downstream packets are routed according to host-specific caches, there is no tunneling within the home domain. An MH maintains only one IP address while in a domain. Handoff is managed locally and the point of traffic rerouting is the crossover node between the two base stations involved in a handoff. This class of schemes achieve faster handoff operation. Lack of frequent change of address within a domain could help in QoS implementation. But these schemes have two major flaws: intra-domain routing is non-optimal because all packets from within the domain will be propagated to the gateway including packets bound to hosts in the same domain. Then packets destined to hosts in the domain will be routed back. Again it is not scalable because the idea of host-specific route cache will be highly memory consuming and will limit growth of the system with increase of MHs, this will even be worse in IPv6 with 128-bit host addresses.

The class of hierarchical-MIP-variant employ the general idea of the basic MIP or MIPv6 in a localized manner. Within a domain, a MH needs a minimum of two COAs, one of which must be a globally routable address, usually the address of the gateway node (actually the number of COAs depends on the number of level of hierarchies employed). While roaming within a domain, an MH does not need to register with its HA, but while roaming within a domain's subnets, it must get new COAs and update the gateway with this information. The gateway receives packets destined for the MH and tunnels them to the particular subnet where the MH is. These types of schemes reduce signaling load injected into the Internet backbone and also reduce handoff latency more than basic MIPv6 depending on the size of the domain. It makes use of traditional IP routing (which supports scalability) in the domain by encapsulating and decapsulating packets. But encapsulation and decapsulation of packets introduces processing latency, more seriously, due to encapsulation, QoS-specific treatment of packets which are placed in the original packet header are not seen and handled by intermediate nodes. Also resource reservation is rendered difficult by frequent change of COA in a given domain. Examples of this class are exposed in "Mobile IP Regional Registration," Internet Draft, draft-ietf-mobileip-reg-tunnel-02.txt, March 2000, by E. Gustafsson, A Johnson and C. Perkins and "TeleMIP: Telecommunications-enhanced Mobile IP Architecture for Fast Intradomain Mobility," IEEE Pers. Comm., Aug. 2000, pp. 50-58, by S. Das et al.

Some IPv6-based micro-mobility proposals, which are exposed in "Mobile IP Regional Registration," Internet Draft, draft-ietf-mobileip-reg-tunnel-02.txt, March 2000, by E. Gustafsson, A Johnson and C. Perkins, "TeleMIP: Telecommunications-enhanced Mobile IP Architecture for Fast Intradomain Mobility," IEEE Pers. Comm., 2000, pp. 50-58, by S. Das et al. and "A Hierarchical Mobile IPv6 Proposal", Technical Report No. 0226 INRIA, November 1998, by C. Castelluccia, also employ the idea of hierarchy. But unlike IPv4 systems, routing is relatively optimal because CHs can maintain binding update caches. But CHs outside a domain will route packets up to the gateway (with the globally routable (COA). These packets will be tunneled to respective MH, using the physical COA, while CH within the domain can route packets directly to MH. Again MH will always get a new COA while it roams in the domain and update the gateway and the CHs with it. Apart from the relatively improved routing scheme, this class of schemes shares in the same problems as enumerated above. Moreover, the triangle routing problem is shifted to the gateway of the domains in all the schemes.

All these efforts are the right steps in the right direction, but in trying to solve one problem another is created. For example, the idea of localized mobility management shifted the problem of triangle routing to the local area. This is because all packets going into the local area will have to pass through a gateway into the area, the gateway will in turn tunnel the packets to the appropriate MH. Also, in the effort to reduce or eliminate handoff latency, various levels of complexity are introduced in the network that could make implementation and scalability difficult.

We feel that the reason for this complication is due to a slightly misplaced management orientation that of managing mobile communications in a network basically designed for fixed communications. Because communication in a mobile environment is different from communications in a fixed environment due to their peculiar characteristics, managing mobility in a network designed for fixed communication should naturally be cumbersome, hence the current problems with mobility in the Internet. We argue that designing mobile network based on a different paradigm will be the ideal thing. This mobility-specific network will be part of the global Internet. Moreover, traditionally, the Internet is a network of networks; the mobility specific network will form one of these networks with a gateway linking it to the global Internet.

WO 01/69948 A1 discloses a multiple tree hierarchical communication system and method. A set of location registration nodes is designed to handle mobile registration locally. These nodes comprise LR tables having pointer information. The pointer is an IP address of another node to which the present node will forward outbound packets for a mobile user.

SUMMARY OF THE INVENTION

It is, therefore, an object of the present invention to provide a hierarchical mobile packet communication network, which exploits a novel mobility management architecture i.e. completely hierarchical architecture which possesses the scalability properties, a modified form of prefix routing of IP adapted for a mobile environment as defined in claim 1.

It is another object of the present invention to provide a method of communication in the hierarchical mobile packet communication network as defined in claim 10.

The hierarchical mobile packet communication network as described above, further characterized by:

said network node in top layer is a gateway.

The hierarchical mobile packet communication network as described above, further characterized by:

said network node in mid-layer is a subdomain router.

The hierarchical mobile packet communication network as described above, further characterized by:

said network node in bottom layer is an access router.

The hierarchical mobile packet communication network as described above, further characterized by:

said network node in bottom layer is a based station.

The hierarchical mobile packet communication network as described above, further characterized by:

said globally routable address is the IPv6 address.

The hierarchical mobile packet communication network as described above, further characterized by: a group of most significant bits (MSB) in the SLA ID part of said IPv6 address is used as the prefix of said network node in the top layer.

The hierarchical mobile packet communication network as described above, further characterized by: a next group of most significant bits (MSB) in said SLA ID part of said IPv6 address is used as the prefix of said network node in the mid-layer.

The hierarchical mobile packet communication network as described above, further characterized by:

said MH status table is composing of a native MH status table which records the status of the native mobile terminals and a visit MH status table which records the status of the visit mobile terminals.

The method of communication in a hierarchical mobile packet communication network according to the present invention, wherein the hierarchical mobile packet communication network comprises a plurality of network nodes configured in hierarchical architecture and a plurality of mobile terminals; the network node in top layer connects upstream to the Internet and downstream to the network nodes in the mid-layer; the network nodes in the mid-layer connect upstream to network node in top layer or another network node in the higher mid-layer and downstream to the network nodes in the bottom layer or the network nodes in the lower mid-layer, the network nodes in the bottom layer connect upstream to the network nodes in the mid-layer and wirelessly downstream to the mobile terminals; characterized by: each network node is assigned a block of globally routable address space which have the same prefix, and inherits the prefix of its parent network node; each mobile terminal has its unique address which is comprised of the prefixes for the network nodes to which it belongs and the interface ID, which is not change when the mobile terminals is roaming in foreign subnet; each network node keeps a MH status table which records the status of the native mobile terminals and visit mobile terminals roaming in this subnet; the mobile terminal uses beacon signal transmitted from the network node in the bottom layer to determine whether it is at home subnet or roaming in a foreign subnet; the mobile terminal roaming in a foreign subnet send a registration message to the corresponding foreign network node, and the network nodes in the hierarchical routing path from said corresponding foreign network node to the home network node to which mobile terminal belongs add the information about the roaming; the network node transmits the packet received from the terminal in its subnet to the destination terminal if the MH status table indicate that the destination terminal is active in its subnet, or forwards said packet to its parent network node; said forwards packet is transferred to the destination terminal through the hierarchical routing path.

The method of communication in a hierarchical mobile packet communication network as described above, further characterized by: said globally routable address is the IPv6 address.

The method of communication in a hierarchical mobile packet communication network as described above, further characterized by: a group of most significant bits (MSB) in the SLA ID part of said IPv6 address is used as the prefix of said network node in the top layer.

The method of communication in a hierarchical mobile packet communication network as described above, further characterized by: a next group of most significant bits (MSB) in said SLA ID part of said IPv6 address is used as the prefix of said network node in the mid-layer.

The method of communication in a hierarchical mobile packet communication network as described above, further characterized by: said MH status table is composing of a native MH status table which records the status of the native mobile terminals and a visit MH status table which records the status of the visit mobile terminals.

The hierarchical mobile packet communication network according to the present invention is a domain-based IPv6 access network designed on a mobile plane but which is adapted to Internet characteristics. By this, routing is prefix-based, and in a home domain of the network, there is no need for care-of-addresses or binding update signaling while MHs roam in their home domains. This is a good performance point because there is some localized nature on both call delivery and user roaming. That is, in the real world, the user usually roams in the same or the nearby domains with high probability. The same phenomenon can be observed in call delivery. A large number of calls are local calls. According to the estimation, this probability is about 70%. This localized nature of mobile user behavior is a very nice feature which the present invention has taken advantage of. This implies that 70% of the time routing in the hierarchical mobile packet communication network according to the present invention is optimal without the burden of encapsulation and decapsulation, and without mobility related destination options. Also, QoS related treatment which are embedded in the individual packets are not hidden by encapsulation. No BUs are sent or processed, which yields a good saving in bandwidth, processing time and memory space.

BRIEF DESCRIPTION OF THE DRAWINGS

The above objective and advantages of the present invention will become more apparent by describing in detail a preferred embodiment thereof with reference to the attached drawings, in which:

Fig. 1 is a schematic diagram of an embodiment of the hierarchical mobile packet communication network according to the present invention;

Fig. 2 is a schematic diagram showing the distribution of the address in the hierarchical mobile packet communication network according to the present invention based on IPv6;

Fig. 3 is a schematic diagram of an embodiment of the hierarchical mobile packet communication network according to the present invention with the detailed hierarchical or prefix address distribution;

Fig. 4 shows a example of the MH status table stored in the network node of the hierarchical mobile packet communication network according to the present invention, (a) is a native MH status table, and (b) is a visit MH status table;

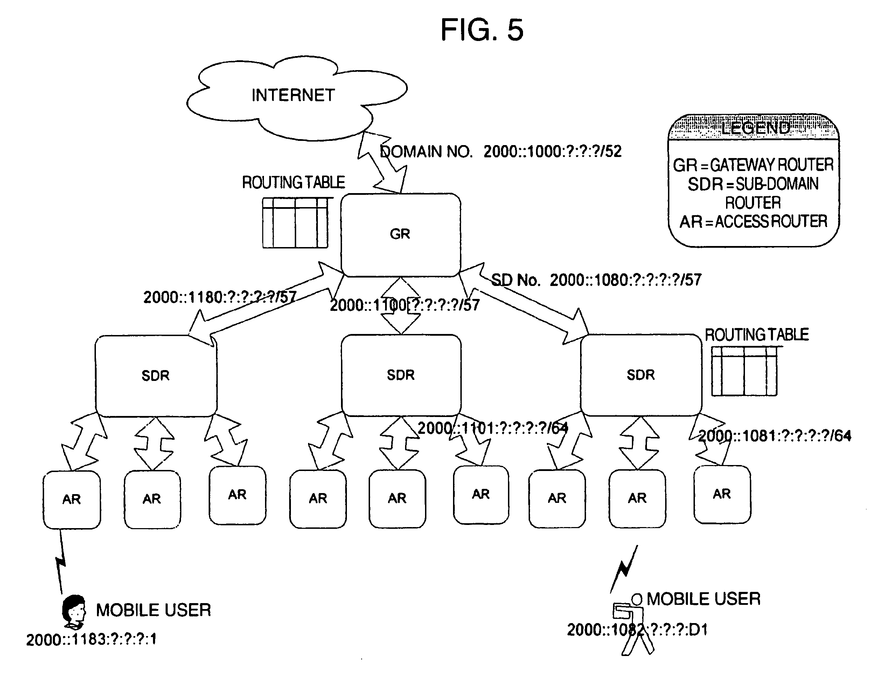

Fig. 5 is another schematic diagram of an embodiment of the hierarchical mobile packet communication network according to the present invention with the hierarchical or prefix address distribution;

Fig. 6 illustrates the hierarchical packet routing procedure in the hierarchical mobile packet communication network according to the present invention;

Fig. 7 is a flow chart of the packet routing procedure in the hierarchical mobile packet communication network according to the present invention.

## DESCRIPTION OF THE INVENTION

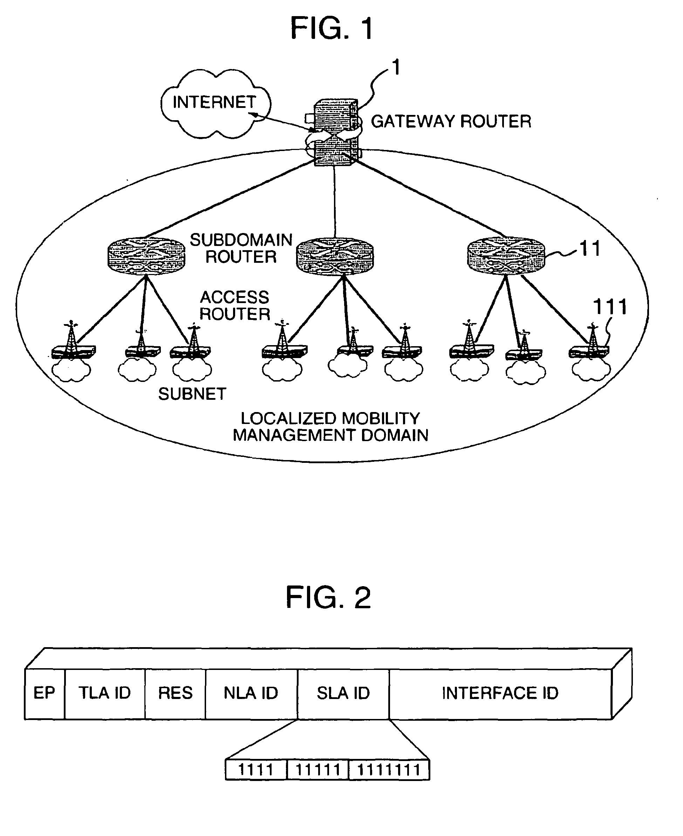

Fig. 1 shows a preferred embodiment of the hierarchical mobile packet communication network according to the present invention, which is a hierarchical IPv6-based mobile network. This network is a domain-based IPv6 access network designed on a mobile plane but which is adapted to Internet characteristics, such as scalable routing, and handles mobility both at the core and the edges.

There are three layers or levels in the architecture, and each layer is composing of one node or nodes. The network nodes are arranged in a logical tree hierarchy. The network node in top layer, i.e. trunk node, is a gateway (1), which connects upstream to the Internet and downstream to the network nodes in the mid-layer. The network nodes in the mid-layer, i.e. branch nodes, are subdomain routers (11), which connect upstream to the truck node and downstream to the network nodes in the bottom layer or leaf layer. The network nodes in the bottom layer, i.e. leaf nodes, are access routers (ARs) (111), which connect upstream to the branch nodes and downstream to the mobile hosts, i.e. mobile terminals (333).

One gateway (1) corresponds one domain, one subdomain router (11) corresponds one subdomain, and one access router (111) corresponds one subnet respectively.

It is assumed that each domain is assigned a block of globally routable IPv6 address space. Advantage is taken of the hierarchical format of these addresses. It is also assumed that there is flexibility in masking suitable group of bits in the address fields in order to create prefixes for the different levels in the hierarchical mobile packet communication network according to the present invention.

The exemplar network shows three levels, but there is also flexibility in this, a domain could have any number of levels depending on the size and the wishes of the administrator.

The routers in the access network will be configured to know their positions in the hierarchy, they should also be able to recognize the level prefixes in the MH addresses. Each node will maintain a routing table according to its position on the hierarchy.

Fig. 2 shows the structure of the globally routable IPv6 address, and the division of SLA ID part of this address in order to distributing the address in the hierarchical mobile packet communication network according to the present invention.

While reference to Fig. 2, Nodes are numbered according to their position in the network hierarchy, for example a group of most significant bits (MSB) could form the level-1 prefix (from top down), and a next group of MSB will form the level-2 prefix and so on. The last level in the hierarchy of prefixes is used to number the access routers, which form the leaf nodes in the domain. The block of Least Significant Bits (LSB) consists addresses for MHs in the coverage area of a given AR. Therefore looking at any MH address, one can tell which domain it belongs to and in this domain which sub-domain it belongs to and then which cell it belongs to in the sub-domain. This numbering architecture greatly reduces routing overhead while a MH roams.

Every MH has a permanent IPv6 address, which is domain dependent. It consists of hierarchy of prefixes down to the lowest prefix, which is the subnet prefix (the AR), and the interface ID that identifies each MH and node interfaces. Domain administrators are free to decide the number of bits to mask in defining the level prefixes. But the highest prefix level defines the domain. Routers must be programmed to know their level and to recognize the level prefix in hot addresses. In fact, the 16-bit field that defines the site level aggregator in the IPv6 address can be manipulated at ease to create this hierarchy of subnets (some of the 64 bits of the host identifier may also be masked to achieve this). For example masking the first 4 bits in the SLS ID field will yield 16 domains. Each domain can still be divided into 32 sub-domains by masking the next 5 bits, each sub-domain can further be divided into 128 subnets and each subnet can accommodate $1.8 \times 10^{19}$ hosts. This is obviously very scalable.

Every AR keeps a record for all communicating MHs in its coverage area. In order to save memory space and processing time, an MH that is turned off has no record in the system. An MH can be in one of four different states: (i) ACTIVE (ii) REST, (iii) A WAY, (iv) OFF. But an MH's record has three fields: (i) ACTIVE (ii) REST, (iii) AWAY. When an MH is away from home the home AR activates the AWAY field in its record. If an MH does not transmit or receive packets for a period of time (this period should be optimized with respect to packet inter-arrival time), in order to save battery power, it will go into a passive mode (REST state). When this happens, it transmits a packet to tell the AR of this condition. The AR in turn activates the REST field in the MH's record, and forwards this information to the sub-domain node. The sub-domain node will enter the MH into its paging list. When a MH is turned off, the turn off action will simultaneously transmit a GOOD-NIGHT packet to the AR. The AR will in turn clear its record from the system.

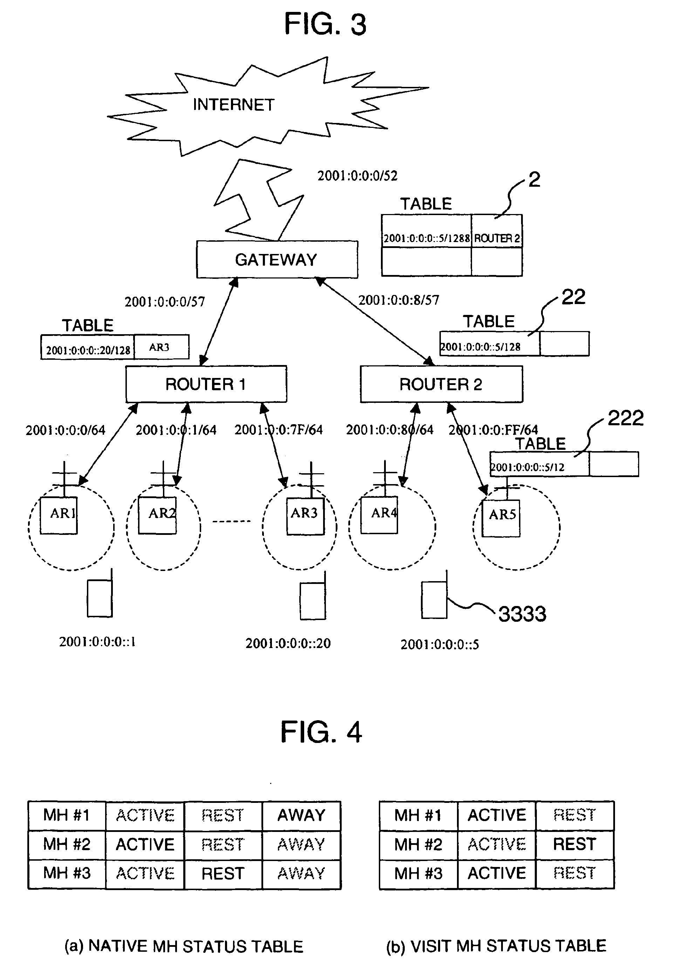

Fig. 4 shows an example of the MH status table stored in the network node of the hierarchical mobile packet communication network according to the present invention. This MH status table may be composing of a native MH status table which records the status of the native mobile terminals and a visit MH status table which records the status of the visit mobile terminals. The native MH status table is show in the Fig. 4(a), and the visit MH status table is show in the Fig. 4(b).

When a MH powers on, it listens and obtains the AR beacon. The beacon signal contains the AR prefix and parameters (e.g. available bandwidth). The MH will use this information to determine whether it is at home or roaming in a foreign subnet. Then it will send a GOOD-MORNING packet to the AR (any time it wakes up is its morning). The AR will open a record for it and activate the ACTIVE field of the record. If a MH powers on in a cell other than its home cell, the respective AR on detecting prefix mismatch in the GOOD-MORNING packet will register the MH in its visiting-MH-list, and then forward the packet to its parent node. This packet will eventually get to the home AR that will open a record for the MH and activate the AWAY field. Also when an MH turns off in a foreign cell, the GOOD-NIGHT packet is propagated to the home AR so that along the way all records for this MH will be cleared from the system. But when a MH goes into the rest state in a foreign cell, the REST packet does not need to be propagated beyond the sub-domain node.

Mobility Management in the hierarchical mobile packet communication network according to the present invention will be described in detail in the following.

1. Roaming in a Home Domain

1.1 Sub-domain roaming

When an MH is at home it sends and receives packets within and from outside the domain in the traditional Internet manner, just like a fixed host. When an MH moves to another subnet within its sub-domain, it does not need to get a COA. It only needs to tell its home Access Router (AR) that it is not at home (the HA functionality can be implemented in the AR, so we use these terms interchangeably). The home AR maintains two lists: (i) native-MH-list and (ii) visiting-MH-list. While the MH is within the home domain, the HA does not need to know, exactly, where it is, i.e. it is enough to know that it is away. The visited AR checks the AR-prefix part of the visiting MH's address and sees that it is a visiting MH (i.e. detects prefix mismatch), it enters it in its visiting-MH-list. And then it sends the address (registration information) to its parent node in the hierarchy (the sub-domain router), this node again checks to see that sub-domain mask of the MH's address matches its own. Then, it makes an entry for the MH mapping its address to the interface from which it was received (due to the prefix idea, a single entry can represent all the MHs that are visiting from a give cell). Every node in the domain maintains a cache entry for roaming hosts in its coverage area. Thus mobility within a given sub-domain is controlled in that sub-domain, and is transparent to other nodes in the domain. Mobility related signaling does not go beyond the sub-domain.

1.2 Inter-sub-domain roaming

An MH can also roam from its home sub-domain to another sub-domain. In this case registration information is propagated beyond the sub-domain node. When the sub-domain node examines the prefix information in the MH address and detects a prefix mismatch, it then knows that this MH does not belong in its coverage area, and therefore has to send the registration information to its parent node, in this case the gateway node. But it will first make an entry for the MH in its cache, mapping the MH address to the interface towards the subnet.

2. Packet Routing in a Home Domain

2.1 MH to MH

When a packet is sent to a roaming MH from within the domain (MH to MH), it will naturally originate from a given AR in the domain. The originating AR checks the destination address of the packet, if the AR-prefix does not match its own, it checks its visiting-MH-list, if the MH is not visiting in its domain, it then routes it to its parent node (a sub-domain node). The sub-domain node checks the sub-domain prefix of the destination address, if it matches its own (i.e. the packet is sent to its domain), it first checks its cache entry to see if the MH is roaming or in the passive mode, if not, it routes the packet by prefix to the MH's home AR. If it finds a cache entry for the MH it routes it to the interface to which the MH is mapped. When the packet gets to the destination AR, the AR checks the AR-prefix of the destination address, if it does not match its own, it then checks its visiting-MH-list to confirm that the MH is residing in its cell, then it transmits the packet through the wireless link to the MH. If the AR-prefix matches its own, it first checks its native-MH-list to confirm that the MH is not away from home, then it transmits the packet through the wireless link to the MH.

When an MH sends a packet to another MH in the same subnet with it, it sends this packet to the AR. The AR first checks the Ar-prefix of the destination address, if it matches its own, it then checks its native-MH-list, if the MH is at home, the AR will send the packet to it. But if the MH is away from (i.e. the away field in its record is activated), the AR routes the packet to its parent node.

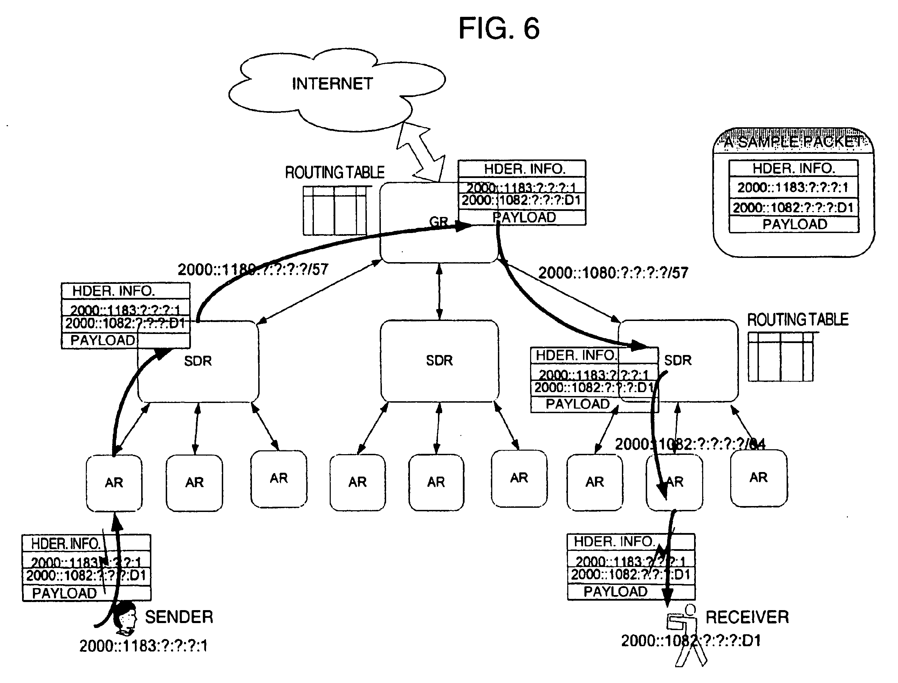

There is no need for packet encapsulation or decapsulation, no need to send binding updates to HA and Correspondent Hosts. It can be seen that routing is localized and optimal. Only inter-sub-domain packets need pass through the gateway node, also only inter-AR packets need pass through the sub-domain router. This ensures load balancing in the network. And more importantly, special packet treatments, such as QoS related treatment indicated in the packet header is not hidden behind encapsulations. Also, there are no encapsulation-decapsulation overheads; 'naked' packets are always routed within the domains of the hierarchical mobile packet communication network, and within the home domain, no mobility related options are needed. Fig. 6 illustrates the hierarchical packet routing procedure in the hierarchical mobile packet communication network according to the present invention.

2.2 Fixed to MH/MH to Fixed host

When a fixed host sends a packet to a MH, this packet will be routed to the mobile access network through the level-1 node (gateway node) in the domain, and then routed hop-by-hop (by prefix) down stream to the MH. Also, when a MH sends a packet to a fixed host, it is routed, by prefix, upstream to the gateway node of the domain then into the fixed Internet. No encapsulation is needed.

3. Roaming in a Foreign Domain

When a MH visits a foreign domain outside the hierarchical mobile packet communication network, it acquires a COA and registers with the AR in whose subnet the COA was acquired. This AR makes a cache entry for the MH mapping its home address to the COA; it then propagates this registration information to the gateway node. This process is natural to this architecture, because the MH home address matches no prefix in this domain. Therefore all the nodes along the path to the gateway node will naturally detect a prefix mismatch and so cache and forward the registration information upstream to the gateway node, which finally caches the MH home address with the corresponding sub-domain prefix. Acknowledgement packet is forward down to the MH via the AR. On receiving acknowledgement, the AR sends acknowledgement packet to the MH and also sends the registration packet to the MH's home AR on behalf of the MH (this will limit the use of the scarce wireless bandwidth).

The MH's home AR, on receiving this packet makes an entry for it, mapping its home address to the COA (the home Ar needs to map the MH to a COA only when the MH is visiting a foreign domain). The MH also needs to send BU to its group of CNs outside the domain. It does not need to update CNs within its current domain, since routing within the domain is prefix-based. After this initial update procedure, the MH does not need to send any BUs while it roams in this domain. Except for the periodic BU refresh packet. The MH does not necessarily need more than one COA while in a foreign domain. When it moves to another subnet in the foreign domain, it will register with the AR that will map the COA to its home address. The MH roaming in a foreign domain will appear like a native host with a pair of addresses. The COA is used to route packets to it while the home address is used to identify it.

4. Packet Routing in a Foreign Domain

When a packet originates for a MH in a foreign domain where it is roaming, the packet is routed normally upwards by each node checking its prefix part of the address, cross checking its visiting-MH-list and then forwarding the packet. When the packet gets to the node in which the MH has a cache entry, the packet is routed downstream to the destination AR that then sends it to the MH. No encapsulation is necessary, therefore no tunneling is needed.

When a packet is originated for the MH from outside the domain, this packet is routed to the COA using the routing header destination option, and is received at the gateway node. The gateway node swaps the COA with the MH's home address, and routes the packet to the sub-domain where the MH is currently residing according to its cache entry for the MH. Then from the sub-domain to the destination AR. Again no tunneling is needed. Since the COA is a domain address, its prefixes tell the nodes where to forward a packet whose destination address is mapped to the COA.

Tunneling is only necessary when a CN outside the current domain does not have binding cache for the MH, in which case it sends the packets to the HA, which in turn encapsulates and tunnels such packet to the MH's COA. The gateway node no reception of such a packet decapsulates it and sends it by normal domain prefix routing to the MH. So the tunneling ends at the gateway node. The HA can send a BU to such CN on behalf of the MH, since the MH is not aware of the tunneling. In this way, the MH's function is reduced, which will help in preserving battery power.

This type of architecture is not only simple but reduces network overhead to the barest minimum. In fact, we believe that with careful design the use of COA will completely be eliminated in IP mobility management. This could be achieved by extending the hierarchy to include a node whose children nodes are the gateway nodes of all the domains. This will give rise to a global mobile IP network.

5. Movement Detection

A roaming MH will always receive and process the beacons advertised by the ARs. When it receives a beacon whose prefix is different from that of the AR under whose coverage it is roaming, it will perform the necessary handoff operations.

In this following, the performance evaluation of hierarchical mobile packet communication network will be described in qualitative and Quantitative aspects respectively by comparing it with some of the existing popular proposals in the IPv4 and IPv6 systems.

1. Qualitative evaluation

Naturally, there is a locality property in human movements and this property is also reflected in the movements of mobile users. According to estimations, a MH roams in its home domain approximately 70% of the time, the rest of the MH's time is spent outside its home domain. The present invention achieves optimal routing without COAs and no binding updates while a MH roams in its home domain. This implies that in the hierarchical mobile packet communication network according to the present invention 70% of the time routing is optimal with minimal memory consumption and minimal signaling load. This level of improvement has not yet been achieved in any of the proposals we are able to see.

Optimal routing is achieved in MIPv6 when CHs are updated with COAs, but such directly routed packets must carry routing header option that consumes extra bandwidth. Also, the MH on reception of such packets must swap the destination address (which is its COA) with its home address before passing it to higher-layer protocols for processing, this means extra processing, our optimal route does not impact any extra burden on the network.

One may argue that there is an element of host-specific routing in our intra-domain mobility management, because when a MH moves into a neighboring cell, its location information is recorded as an interface mapping of its address by the sub-domain bode. But we argue that this is a clever way to achieve optimal mobility management with minimal network load because this direct mapping only happens in one or two nodes depending on the degree of roaming. Again, advantage can be taken of the prefix routing so that the upper layers in the address need not be mapped, (only the portion necessary to route the packet to the MH need be recorded) thereby consuming very little memory. When this is compared against the real host-base-routing protocols like those exposed in "IP Micro-mobility support using HAWAII," Internet Draft, draft-ietf-mobileip-hawaii-00.txt, June 1999, by R. Ramjee et al., and "Design, Implementation, and Evaluation of Cellular IP," IEEE Pers. Comm., Aug. 2000, pp. 42-49, by A. T. Campbell et al., where a complete one-to-one mapping has to be made for each MH in all the nodes it will pass through to the gateway, then one can come to an appreciation of the cost-effectiveness of our proposal. Also, in the HBR, every upstream packet must get to the gateway only to be routed back into the domain, which means that the closer a node is to the top, the more loaded it will be, this impairs scalability. Our own is not so, intra-cell communication does not go beyond the access router, also intra-sub-domain communication does not go beyond the sub-domain node. In this way the load is distributed across the network nodes ensuring scalability.

Many existing proposals did not make room for passive connectivity. No mobile access network can be complete without this feature, because it offers the dual advantage of conserving mobile terminal power and prevents unnecessary signaling in the system when a MH is idle. Surprisingly, only a few proposals considered this feature, e.g. [5], [6], our own inclusive.

2. Quantitative evaluation

Any localized mobility management should perform better than the basic MIPv6 otherwise there should be no need for such efforts. In view of this, it is necessary to compare the present invention with the basic MIPv6 as is done in other MIPv6 extensions. To this end we compare the signaling load imposed on the Internet by MIPv6 and the present invention. It is believed that what is limiting subscribers to wireless networks today is technology. IPv6 access networks will have to handle billions of wireless/mobile terminals, in such scenario, scalability in access networks will be a serious performance measure. In view of this, we also compare intra-domain signaling load of the present invention with that of other micro-mobility proposals in IPv6 system.

2.1 Signal load estimation

According to MIPv6, a MH sends BUs to:

its HA each time it changes subnet, and the HA must send a BA in acknowledgement of this BU. We denote $f_{HA}$ the BU emission frequency from the MH to the HA.

each of its CHs each time it crosses a subnet boundary, and then periodically to refresh CHs' cache entries. After the MH sends consecutive BUs at an initial frequency of $f_{MAX}$ to a given CH with the same COA, the MH should reduce this frequency to $f_{REF}$ to continue sending BUs to this CH for refreshing its cache. We denote $f_{CH}$ the average BU emission frequency from MH to CH.

$f_{HA}$ and $f_{REF}$ both depend on the rate of move (mobility rate = $\lambda_s$) of the MH, and are given as follows:

$$
f_{CH} = \begin{cases} \{(f_{REF}/\lambda_s) + (M-1)\} \times \lambda_s & \text{for } f_{REF} > \lambda_s \\ M \times \lambda_s & \text{for } 1/M \times \lambda_{MAX} \geq \lambda_s \geq f_{REF} \\ (f_{REF}\,\lambda_s) \times \lambda_s & \text{for } \lambda_s \geq 1/M \times f_{MAX} \geq f_{REF} \end{cases} \qquad (1)
$$

$$
f_{HA} = \begin{cases} \{(f_{REF}/\lambda_s) + 1\} \times \lambda_s & \text{for } f_{REF} \geq \lambda_s \\ 2 \times \lambda_s & \text{for } \lambda_s \geq f_{REF} \end{cases} \qquad (2)
$$

According to the present invention, intra-domain mobility related signal does not burden the Internet, so, that contributes zero bandwidth consumption. But each time a MH moves into a new domain, it gets a COA and then sends BU to:

the gateway node of the domain and receives acknowledgement
its HA and receives acknowledgement message, BA, from the HA at frequency $f_{CHIMA}$
its CHs out side the domain also at frequency $f_{CHIMA}$.

The sojourn time in a subnet is lower than the sojourn time in a domain since a domain is supposed to be made up of one or more subnets. And the frequency of sending or refreshing BUs should depend on the sojourn time. For this reason, we adopt the value $1/((1-\varphi)\lambda_s)$ as the domain sojourn time. This gives the inter-domain transition rate as $(1-\varphi)\lambda_s$, where $\lambda_s$ is subnet transition rate. And we interpret $\varphi$ as a scaling factor which gives a reflection of the size of the domain with respect to subnet, i.e. $\varphi = 0$ scales down to one subnet. Following this reasoning we choose

$$
f_{CHINA} = (1-\varphi)\lambda_s
$$

Bandwidth consumption for the two systems is therefore given by:

$$BW_{MIPv6} = S_{BU} \times (f_{CH} \times (N_{CH} + 1) + f_{HA}) \qquad (3)$$

$$BW_{CHIMA} = S_{BU} \times (1-\varphi)\lambda s \times (N_{CH} + 1) \qquad (4)$$

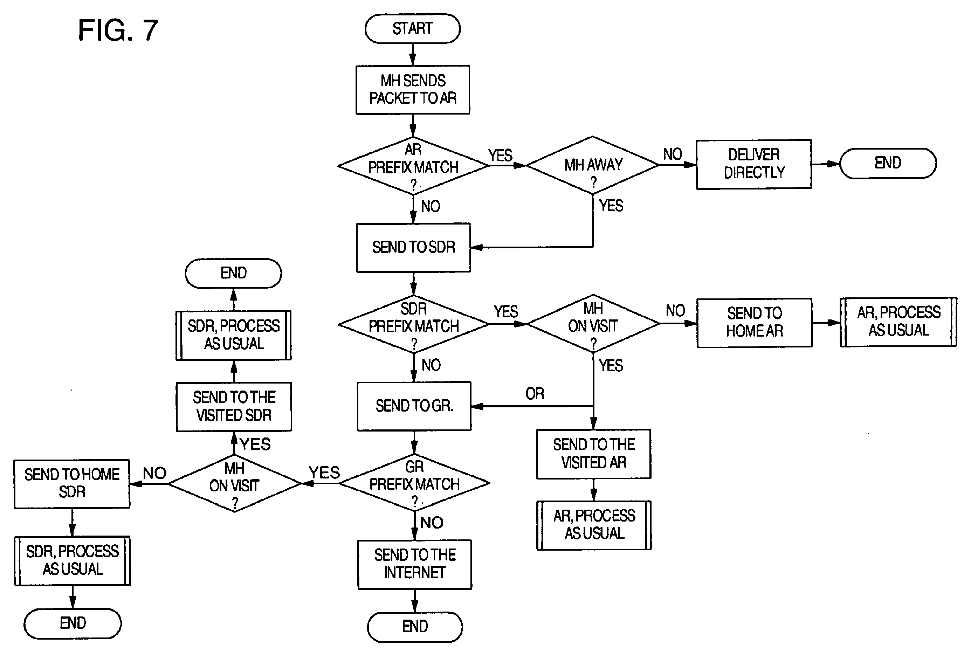

Where $N_{CH}$ = average number of CHs, $\lambda_s$ = average subnet transition rate and $S_{BU}$ = 68 bytes (IPv6 header (40) + BU header (28)). These are displayed graphically in Fig. 7 for $N_{CH}$ = 2 and 10, $f_{REF}$ = 1 / 60 , $f_{MAX}$ = 1, M = 5 and $\varphi$ = 0.5. Also, the bandwidth gain of the hierarchical mobile packet communication network according to the present invention over MIPv6 is expressed as $(BW_{MIPv6} - BW_{CHINA})/BW_{MIPv6}$.

Next we consider the intra-domain mobility management signaling for the hierarchical mobile packet communication network according to the present invention and other domain-based HMIPv6. These HMIPv6 are based on flat hierarchy of two levels only. Therefore, for fair comparison, we assume the hierarchical mobile packet communication network according to the present invention is a two-level hierarchy (actually the hierarchical mobile packet communication network according to the present invention is very flexible, any number of hierarchy may be deployed depending on the size of a domain or service provider needs). For other HMIPv6 proposals, the intra-domain mobility management is basically the same, therefore we group them as 'other HMIPv6'. According to these proposals, while a MH roams in a domain (home or foreign), it must have at least two COAs, a regional COA (RCOA) and physical COA (PCOA). Then, it should send BUs to:

domain gateway, which will send acknowledgement message BA to the MH CHs in the domain

All these should be sent/refreshed at a frequency $f_{REF}$. This will consume bandwidth:

$$BW_{others-intra} = \alpha\{S_{BU} \times f_{REF} \times (N_{CH}+1)\}$$
$$+ (1-\alpha)\{S_{BU} \times f_{REF} \times (N_{CH}+1)\} \qquad (5)$$

In the hierarchical mobile packet communication network according to the present invention, while a MH is roaming in its home domain, it does not need any COA, therefore there are no BUs to be sent. Bandwidth consumption is zero. While a MH roams in a foreign domain, it should get a COA and it should send BUs to:

domain gateway, node, which will send a BA in acknowledgement. This should be refreshed with the frequency $f_{CHINA}$.

This will consume bandwidth:

$$BW_{CHIMA-intra} = (1-\alpha)\{Size_{BU} \times (1-\varphi)\lambda_s \times 2\} \qquad (6)$$

The probability of a MH roaming in its home domain is $\alpha$ = 0.69. For fair comparison $f_{CHINA}$ is used in both cases since we are not interested in the effect of refresh frequency, but in the protocol performance.

Next we compare the memory consumption due to location information caching of the hierarchical mobile packet communication network according to the present invention, other HMIPv6 and MIPv6. To do this, we estimate the mobility related memory consumption due to a single MH. Then we investigate the trend of this consumption as number of MHs increase.

In MIPv6, each MH is supposed to maintain a list of its CHs, and every CH maintains a BU cache for each MH it communicates with. For each MH, a HA maintains BU cache. For each cache entry size, we take a flat value of 32 bytes (two IPv6 address). We assume the other items in the cache record, like the life time fields, flags etc., insignificant as the difference they may make per cache will not have effect on our comparison. Therefore, for MIPvy we have for each MH memory consumption ($M_{MIPv6}$) :

$$M_{MIPv6} = 2 \times (N_{CH} + 1) \times S_{entry} \times N_{MH} \qquad (7)$$

In the other HMIPv6, while a MH roams in a domain (home or foreign), it maintains a list of CHs, each CH maintains a BU cache for the MHs it communicates with. The domain gateway node maintains BU cache for every MH in its domain, the HA maintains a BU cache for the MH. This holds the same for the hierarchical mobile packet communication network according to the present invention except that no CH maintains a BU cache while a MH is in the home domain. So for these systems we have memory consumption per MH:

$$M_{HMIPv6} = \alpha \times (N_{CH} + 2) \times S_{entry} \times N_{MH}$$
$$+ (1 - \alpha) \times (N_{CH} + 2) \times N_{MH} \qquad (8)$$

$$M_{CHIMA} = \alpha \times 2 \times S_{entry} \times N_{MH} +$$
$$(1 - \alpha) \times (N_{CH} + 2) \times S_{entry} \times N_{MH} \qquad (9)$$

The hierarchical mobile packet communication network according to the present invention has a novel mobility management architecture, and was developed on a mobile plane above the fixed internet. It is developed to exploit the locality, and scalability properties of hierarchy. It is developed to exploit the locality, and scalability properties of hierarchy. It introduces the idea of hierarchical subnetting and makes use of an adaptation of the prefix routing of the Internet. This results in an increased routing efficiency with minimal mobility related signaling.

**Claims**

1. A hierarchical mobile packet communication network adapted for rendering packet communication with mobile terminals, comprising a plurality of network nodes (1, 11, 111) configured in hierarchical architecture in at least a top layer, a mid-layer and a bottom layer, and a plurality of said mobile terminals (333), wherein
the network node in top layer (1) connects upstream to the Internet and downstream to the network nodes in the mid-layer (11); the network nodes in the mid-layer (11) connect upstream to network node in top layer (1) or to another network node in the mid-layer (11) and connect downstream to the network nodes in the bottom layer (111) or to network nodes in the mid-layer (11); the network nodes in the bottom layer (111) connect upstream to the network nodes in the mid-layer (11) and wirelessly downstream to the mobile terminals (333); wherein network nodes downstream of a bottom layer network node form, together with said bottom layer network node, a subnet to said bottom layer network node;
each network node (1, 11, 111) is assigned a block of globally routable addresses which have the same prefix and which inherit the prefix of its parent network node ; each mobile terminal (333) has its unique address which is comprised of the prefixes of the network nodes to which it is native and an interface ID identifying the mobile terminal, which does not change when said mobile terminal (333) is roaming in a subnet to which it is not native,
each network node (1, 11, 111) keeps a mobile terminal status table (2, 22, 222) which records the status of the native mobile terminals and the status of the visiting mobile terminals roaming in the subnet of said network node, and **characterized in that** each network node also includes a routing table.

2. A network as claimed in claim 1, **characterized in that** said network node in a top layer (1) is a gateway.

3. A network as claimed in claim 1, **characterized in that** said network node in a mid-layer (11) is a subdomain router.

**4.** A network as claimed in claim 1,
**characterized in that** said network node in a bottom layer (111) is an access router.

**5.** A network as claimed in claim 1,
**characterized in that** said network node in a bottom layer (111) is a base station.

**6.** A network as claimed in claim 1, **characterized in that** said globally routable address is an IPv6 address.

**7.** A network as claimed in claim 6,
**characterized in that** a group of most significant bits (MSB) in the SLA ID part of said IPv6 address is used as the prefix of said network node in the top layer.

**8.** A network as claimed in claim 6 or 7,
**characterized in that** a next group of most significant bits (MSB) in said SLA ID part of said IPv6 address is used as the prefix of said network node in the mid-layer.

**9.** A network as claimed in claim 1,
**characterized in that** said mobile terminal status table is composed of a native mobile terminal status table which records the status of the native mobile terminals and a visiting mobile terminal status table which records the status of the visiting mobile terminals.

**10.** A method of communication in a hierarchical mobile packet communication network, adapted for rendering packet communication with mobile terminals, wherein the hierarchical mobile packet communication network comprises a plurality of network nodes (1, 11, 111) configured in hierarchical architecture in at least a top layer, a mid-layer and a bottom layer, and a plurality of said mobile terminals (333); wherein the network node in top layer (1) connects upstream to the Internet and downstream to the network nodes in the mid-layer (11); the network nodes in the mid-layer (11) connect upstream to network node in top layer (1) or another network node in the mid-layer (11) and downstream to the network nodes in the bottom layer (111) or the network nodes in the mid-layer (11); the network nodes in the bottom layer (111) connect upstream to the network nodes in the mid-layer (11) and wirelessly downstream to the mobile terminals (333); wherein network nodes downstream of a bottom layer network node form, together with said bottom layer network node, a subnet to said bottom layer network node; wherein
each network node (1, 11, 111) is assigned a block of globally routable addresses which have the same prefix, and which inherit the prefix of its parent network node;
each mobile terminal (333) has its unique address which is comprised of the prefixes for the network nodes to which it is native and the interface ID identifying the mobile terminal, which does not change when said mobile terminal (333) is roaming in a subnet to which it is not native;
the mobile terminal (333) uses a beacon signal transmitted from the network node in the bottom layer (111) to determine whether it is in the subnet to which it is native or whether it is roaming in a foreign subnet;
the mobile terminal (333) roaming in a foreign subnet sends a registration message to the corresponding foreign network node (111), and the network nodes (1, 11, 111) in the hierarchical routing path from said corresponding foreign network node to the home network node to which the mobile terminal is native add the information about the roaming;
the network node (111) transmits the packet received from the terminal in its subnet to the destination terminal if the mobile terminal status table indicates that the destination terminal is active in its subnet, or forwards said packet to its upstream network node;
said forwarded packet is transferred to the destination terminal through the hierarchical routing path-,
each network node (1, 11, 111) keeps a mobile terminal status table (2, 22, 222) which records the status of the native mobile terminals and the status of the visiting mobile terminals roaming in the subnet of said network node, and **characterized in that** each network node also includes a routing tables.

**11.** A method as claimed in claim 10, **characterized in that** said globally routable address is an IPv6 address.

**12.** A method as claimed in claim 10, **characterized in that** a group of most significant bits (MSB) in the SLA ID part of said IPv6 address is used as the prefix of said network node in the top layer.

**13.** A method as claimed in claim 10, **characterized in that** a next group of most significant bits (MSB) in said SLA-ID part of said IPv6 address is used as the prefix of said network node in the mid-layer.

**14.** A method as claimed in claim 10, **characterized in that** said mobile terminal status table (2, 22, 222) is composed of a native mobile terminal status table which records the status of the native mobile terminals and a visiting mobile terminal status table which records the status of the visiting mobile terminals.

**Patentansprüche**

**1.** Hierarchisches, mobiles Paketkommunikationsnetzwerk, das zum Bereitstellen von Paketkommunikation mit mobilen Endgeräten ausgelegt ist, mit mehreren Netzwerkknoten (1, 11, 111), die in hierarchischer Architektur als zumindest eine obere Schicht, eine mittlere Schicht und eine untere Schicht konfiguriert sind, und mehreren mobilen Endgeräten (333), wobei

der Netzwerkknoten in der oberen Schicht (1) aufwärts mit dem Internet und abwärts mit den Netzwerkknoten in der mittleren Schicht (11) verbunden ist, die Netzwerkknoten in der mittleren Schicht (11) aufwärts mit dem Netzwerkknoten in der oberen Schicht (1) oder einem anderen Netzwerkknoten in der mittleren Schicht (11) und abwärts mit den Netzwerkknoten in der unteren Schicht (111) oder mit Netzwerkknoten in der mittleren Schicht (11) verbunden ist; die Netzwerkknoten in der unteren Schicht (111) aufwärts mit den Netzwerkknoten in der mittleren Shicht (11) und abwärts drahtlos mit den mobilen Endgeräten (333) verbunden sind; wobei Netzwerkknoten abwärts eines Netzwerkknotens in der unteren Schicht zusammen mit dem Netzwerkknoten in der unteren Schicht ein Unternetz für den Netzwerkknoten in der unteren Schicht bilden;

jedem Netzwerkknoten (1, 11, 111) ein Block global routingfähiger Adressen zugeordnet ist, die dasselbe Präfix haben und

die das Präfix ihrer jeweiligen Eltern-Netzwerkknoten annehmen; wobei jedes mobile Endgerät (333) eine eindeutige Adresse hat, die aus den Präfixen der Neztwerkknoten besteht, zu denen es gehört, und aus einer Schnittstellenkennung, die das mobile Endgerät identifiziert, die sich nicht ändert, wenn sich das mobile Endgerät (333) in einem Unternetz, zu dem es nicht gehört, bewegt,

jeder Netzwerkknoten (1, 11, 111) eine Statustabelle (2, 22, 222) zu mobilen Endgeräten führt, die den Status der zugehörigen mobilen Endgeräte und den Status von besuchenden mobilen Endgeräten, die sich im Unternetz des jeweiligen Netzwerkknotens bewegen, aufzeichnet, und

**dadurch gekennzeichnet, dass**

jeder Netzwerkknoten auch eine Routing-Tabelle aufweist.

**2.** Netzwerk nach Anspruch 1, **dadurch gekennzeichnet, dass** der Netzwerkknoten in einer oberen Schicht (1) ein Gateway ist.

**3.** Netzwerk nach Anspruch 1, **dadurch gekennzeichnet, dass** der Netzwerkknoten in einer mittleren Schicht (11) ein Unterdomain-Router ist.

**4.** Netzwerk nach Anspruch 1, **dadurch gekennzeichnet, dass** der Netzwerkknoten in einer unteren Schicht (111) ein Zugangsrouter ist.

**5.** Netzwerk nach Anspruch 1, **dadurch gekennzeichnet, dass** der Netzwerkknoten in einer unteren Schicht (111) eine Basisstation ist.

**6.** Netzwerk nach Anspruch 1, **dadurch gekennzeichnet, dass** die global routing-fähige Adresse eine IPv6-Adresse ist.

**7.** Netzwerk nach Anspruch 6, **dadurch gekennzeichnet, dass** eine Gruppe der höchstwertigen Bits (MSB) im SLA-ID-Teil der IPv6-Adresse als Präfix des Netzwerkknotens in der oberen Schicht verwendet wird.

**8.** Netzwerk nach Anspruch 6 oder 7, **dadurch gekennzeichnet, dass** eine nächste Gruppe von höchstwertigen Bits (MSB) im SLA-ID-Teil der IPv6-Adresse als Präfix der Netzwerkknoten in der mittleren Schicht verwendet wird.

**9.** Netzwerk nach Anspruch 1, **dadurch gekennzeichnet, dass** die Statustabelle der mobilen Endgeräte aus einer Statustabelle für zugehörige mobile Endgeräte besteht, die den Status der zugehörigen mobilen Endgeräte aufzeichnet, und einer Statustabelle für besuchende mobile Endgeräte, die den Status der besuchenden mobilen Endgeräte aufzeichnet.

**10.** Verfahren zur Kommunikation in einem hierarchischen, mobilen Paketkommunikationsnetzwerk, das zur Vornahme von Paketkommunikation mit mobilen Endgeräten ausgelegt ist, wobei das hierarchische, mobile Paketkommunikationsnetzwerk mehrere Netzwerkknoten (1, 11, 111) aufweist, die in hierarchischer Architektur in zumindest eine obere Schicht, eine mittlere Schicht und eine untere Schicht konfiguriert sind, und mehrere der mobilen Endgeräte (333); wobei der Netzwerkknoten in der oberen Schicht (1) nach oben mit dem Internet und nach unten mit den Netzwerkknoten in der mittleren Schicht (11) verbunden ist, die Netzwerkknoten in der mittleren Schicht (11) nach oben mit einem Netzwerkknoten in der oberen Schicht (1) oder einem anderen Netzwerkknoten in der mittleren Schicht (11) und nach unten mit den Netzwerkknoten in der unteren Schicht (111) oder einem Netzwerkknoten in der mittleren Schicht (11) verbunden sind; die Netzwerkknoten in der unteren Schicht (111) nach oben mit dem Netzwerkknoten in der mittleren Schicht (11) und drahtlos nach unten mit den mobilen Endgeräten (333) verbunden sind, wobei Netzwerkknoten unterhalb eines Netzwerkknotens in der unteren Schicht zusammen mit dem Netzwerkknoten in der unteren Schicht ein Unternetz für den Netzwerkknoten der unteren Schicht bilden; wobei jeder Netzwerkknoten (1, 11, 111) einen Block von global routing-fähigen Adressen zugeordnet hat, die das gleiche Präfix haben und die das Präfix ihrer Eltern-Netzwerkknoten annehmen; jedes mobile Endgerät (333) eine eindeutige Adresse hat, die aus den Präfixen der Netzwerkknoten besteht, zu denen es gehört, und der Schnittstellenkennung, die das mobile Endgerät identifiziert, die sich nicht ändert, wenn sich das mobile Endgerät (333) in einem Unternetz, zu dem es nicht gehört, bewegt,

das mobile Endgerät (333) ein Beacon-Signal verwendet, das vom Netzwerkknoten in der unteren Schicht (111) ausgesendet wurde, um zu bestimmen, ob es sich im Unternetz befindet, zu dem es gehört, oder ob es sich in einem fremden Unternetz bewegt; das sich in einem fremden Unternetz bewegende mobile Endgerät (333) eine Registriernachricht an den entsprechenden fremden Netzwerkknoten (111) sendet und die Netzwerkknoten (1, 11, 111) im hierarchischen Routing-Pfad vom entsprechenden fremden Netzwerkknoten zum Heimat-Netzwerkknoten, zu dem das mobile Endgerät gehört, die Information über das Bewegen hinzufügen;

der Netzwerkknoten (111) das vom Endgerät empfangene Paket in seinem Unternetz an das Zielendgerät überträgt, wenn die Statustabelle der mobilen Endgeräte angibt, dass das Zielendgerät in seinem Unternetz aktiv ist, oder das Paket an seinen aufwärtigen Netzwerkknoten weiterleitet;

das weitergeleitete Paket über den hierarchischen Routing-Pfad an das Zielendgerät übertragen wird, jeder Netzwerkknoten (1, 11, 111) eine Statustabelle (2, 22, 222) für mobile Endgeräte führt, die den Status der zugehörigen mobilen Endgeräte und den Status der besuchenden mobilen Endgeräte, die sich im Unternetz der Netzwerkknotens befinden, aufzeichnet, und

**dadurch gekennzeichnet, dass**

jeder Netzwerkknoten auch eine Routing-Tabelle aufweist.

**11.** Verfahren nach Anspruch 10, **dadurch gekennzeichnet, dass** die global routing-fähige Adresse eine IPv6-Adresse ist.

**12.** Verfahren nach Anspruch 10, **dadurch gekennzeichnet, dass** eine Gruppe der höchstwertigen Bits (MSB) im SLA-ID-Teil der IPv6-Adresse als Präfix des Netzwerkknotens in der oberen Schicht verwendet wird.

**13.** Verfahren nach Anspruch 10, **dadurch gekennzeichnet, dass** eine nächste Gruppe von höchstwertigen Bits (MSB) im SLA-ID-Teil der IPv6-Adresse als Präfix der Netzwerkknoten in der mittleren Schicht verwendet wird.

**14.** Verfahren nach Anspruch 10, **dadurch gekennzeichnet, dass** die Statustabelle (2, 22, 222) der mobilen Endgeräte aus einer Statustabelle für zugehörige mobile Endgeräte besteht, die den Status der zugehörigen mobilen Endgeräte aufzeichnet, und einer Statustabelle für besuchende mobile Endgeräte, die den Status der besuchenden mobilen Endgeräte aufzeichnet.

**Revendications**

**1.** Un réseau mobile hiérarchique de communication par paquets adapté pour permettre la communication par paquets avec des terminaux mobiles, comprenant une pluralité de noeuds de réseau (1, 11, 111) configurés selon une architecture hiérarchique dans au moins une couche supérieure, une couche intermédiaire et une couche inférieure, et une pluralité de terminaux mobiles (333), dans lequel

le noeud de réseau dans la couche supérieure (1) se connecte en amont à l'Internet et en aval aux noeuds de réseau dans la couche intermédiaire (11) ; les noeuds de réseau dans la couche intermédiaire (11) se connectent en amont au noeud de réseau dans la couche supérieure (1) ou à un autre noeud de réseau dans la couche intermédiaire (11) et se connectent en aval aux noeuds de réseau dans la couche inférieure (111) ou aux noeuds de réseau dans la couche intermédiaire (11) ; les noeuds de réseau dans la couche inférieure (111) se connectent en amont aux noeuds de réseau dans la couche intermédiaire (11) et se connectent sans fil en aval aux terminaux mobiles (333) ; dans lequel les noeuds de réseau en aval d'un noeud de réseau de couche inférieure constituent, avec ledit noeud de réseau de couche inférieure, un sous-réseau dudit noeud de réseau de couche inférieure ; chaque noeud de réseau (1, 11, 111) se voit attribuer un bloc d'adresses globalement routables qui ont le même préfixe et qui héritent du préfixe de leur noeud de réseau souche ; chaque terminal mobile (333) possède son adresse unique qui est composée des préfixes des noeuds de réseau dont il est originel et d'un ID d'interface identifiant le terminal mobile, qui ne change pas quand ledit terminal mobile (333) se déplace dans un sous-réseau dont il n'est pas originel,

chaque noeud de réseau (1, 11, 111) conserve une table d'état des terminaux mobiles (2, 22, 222) qui enregistre l'état des terminaux mobiles originels et l'état des terminaux mobiles en visite se déplaçant dans le sous-réseau dudit noeud de réseau, **caractérisé en ce que** chaque noeud de réseau inclut également une table de routage.

2. Un réseau tel que revendiqué dans la revendication 1, **caractérisé en ce que** ledit noeud de réseau dans une couche supérieure (1) est une passerelle.

3. Un réseau tel que revendiqué dans la revendication 1, **caractérisé en ce que** ledit noeud de réseau dans une couche intermédiaire (11) est un routeur de sous-domaine.

4. Un réseau tel que revendiqué dans la revendication 1, **caractérisé en ce que** ledit noeud de réseau dans une couche inférieure (111) est un routeur d'accès.

5. Un réseau tel que revendiqué dans la revendication 1, **caractérisé en ce que** ledit noeud de réseau dans une couche inférieure (111) est une station de base.

6. Un réseau tel que revendiqué dans la revendication 1, **caractérisé en ce que** ladite adresse globalement routable est une adresse IPv6.

7. Un réseau tel que revendiqué dans la revendication 6, **caractérisé en ce qu'**un groupe de bits de plus fort poids (MSB) dans la partie SLA ID de ladite adresse IPv6 est utilisé comme préfixe dudit noeud de réseau dans la couche supérieure.

8. Un réseau tel que revendiqué dans la revendication 6 ou 7, **caractérisé en ce qu'**un groupe suivant de bits de plus fort poids (MSB) dans ladite partie SLA ID de ladite adresse IPv6 est utilisé comme préfixe dudit noeud de réseau dans la couche intermédiaire.

9. Un réseau tel que revendiqué dans la revendication 1, **caractérisé en ce que** ladite table d'état des terminaux mobiles est composée d'une table d'état des terminaux mobiles originels qui enregistre l'état des terminaux mobiles originels et d'une table d'état des terminaux mobiles en visite qui enregistre l'état des terminaux mobile en visite.

10. Un procédé de communication dans un réseau mobile hiérarchique de communication par paquets, adapté pour permettre la communication par paquets avec des terminaux mobiles, dans lequel le réseau mobile hiérarchique de communication par paquets comprend une pluralité de noeuds de réseau (1, 11, 111) configurés selon une architecture hiérarchique dans au moins une couche supérieure, une couche intermédiaire et une couche inférieure, et une pluralité desdits terminaux mobiles (333) ; dans lequel le noeud de réseau dans la couche supérieure (1) se connecte en amont à l'Internet et en aval aux noeuds de réseau dans la couche intermédiaire (11) ; les noeuds de réseau dans la couche intermédiaire (11) se connectent en amont au noeud de réseau dans la couche supérieure (1) ou à un autre noeud de réseau dans la couche intermédiaire (11) et se connectent en aval aux noeuds de réseau dans la couche inférieure (111) ou aux noeuds de réseau dans la couche intermédiaire (11) ; les noeuds de réseau dans la couche inférieure (111) se connectent en amont aux noeuds de réseau dans la couche intermédiaire (11) et se connectent sans fil en aval aux terminaux mobiles (333) ; dans lequel les noeuds de réseau en aval d'un noeud de réseau de couche inférieure constituent, avec ledit noeud de réseau de couche inférieure, un sous-réseau dudit noeud de réseau de couche inférieure ; dans lequel

chaque noeud de réseau (1, 11, 111) se voit attribuer un bloc d'adresses globalement routables qui ont le même préfixe et qui héritent du préfixe de leur noeud de réseau souche ;

chaque terminal mobile (333) possède son adresse unique qui est composée des préfixes des noeuds de réseau dont il est originel et d'un ID d'interface identifiant le terminal mobile, qui ne change pas quand ledit terminal mobile (333) se déplace dans un sous-réseau dont il n'est pas originel ;

le terminal mobile (333) utilise un signal de balise transmis à partir du noeud de réseau dans la couche inférieure (111) pour déterminer s'il se trouve dans le sous-réseau dont il est originel ou s'il se déplace dans un sous-réseau étranger ;

le terminal mobile (333) qui se déplace dans un sous-réseau étranger envoie un message d'enregistrement au noeud de réseau étranger correspondant (111), et les noeuds de réseau (1, 11, 111) dans le trajet de routage hiérarchique à partir dudit noeud de réseau étranger correspondant jusqu'au noeud de réseau domestique dont le terminal mobile est originel ajoutent les informations relatives à l'itinérance ;

le noeud de réseau (111) transmet le paquet reçu du terminal de son sous-réseau au terminal de destination si la table d'état des terminaux mobiles indique que le terminal de destination est actif dans son sous-réseau, ou envoie ledit paquet à son noeud de réseau en amont ;

ledit paquet envoyé est transféré au terminal de destination par le biais du trajet de routage hiérarchique, chaque noeud de réseau (1, 11, 111) conserve une table d'état des terminaux mobiles (2, 22, 222) qui enregistre l'état des terminaux mobiles originels et l'état des terminaux mobiles en visite se déplaçant dans le sous-réseau dudit noeud de réseau, **caractérisé en ce que** chaque noeud de réseau inclut également une table de routage.

11. Un procédé tel que revendiqué dans la revendication 10, **caractérisé en ce que** ladite adresse globalement routable est une adresse IPv6.

12. Un procédé tel que revendiqué dans la revendication 10, **caractérisé en ce qu'**un groupe de bits de plus fort poids (MSB) dans la partie SLA ID de ladite adresse IPv6 est utilisé comme préfixe dudit noeud de réseau dans la couche supérieure.

13. Un procédé tel que revendiqué dans la revendication 10, **caractérisé en ce qu'**un groupe suivant de bits de plus fort poids (MSB) dans ladite partie SLA ID de ladite adresse IPv6 est utilisé comme préfixe dudit noeud de réseau dans la couche intermédiaire.

14. Un procédé tel que revendiqué dans la revendication 10, **caractérisé en ce que** ladite table d'état des terminaux mobiles (2, 22, 222) est composée d'une table d'état des terminaux mobiles originels qui enregistre l'état des terminaux mobiles originels et d'une table d'état des terminaux mobiles en visite qui enregistre l'état des terminaux mobile en visite.

## FIG. 1

## FIG. 2

| EP | TLA ID | RES | NLA ID | SLA ID | INTERFACE ID |
|----|--------|-----|--------|--------|--------------|

| 1111 | 11111 | 1111111 |
|------|-------|---------|

# FIG. 3

INTERNET

2001:0:0:0/52

GATEWAY

TABLE /2

| 2001:0:0:0::5/1288 | ROUTER 2 |
|---|---|
|  |  |

2001:0:0:0/57

2001:0:0:8/57

TABLE

| 2001:0:0:0::20/128 | AR3 |
|---|---|

TABLE /22

| 2001:0:0:0::5/128 |  |
|---|---|

ROUTER 1

ROUTER 2

2001:0:0:0/64    2001:0:0:1/64    2001:0:0:7F/64    2001:0:0:80/64    2001:0:0:FF/64

TABLE /222

| 2001:0:0:0::5/12 |  |
|---|---|

AR1    AR2    ------    AR3    AR4    AR5

~3333

2001:0:0:0::1         2001:0:0:0::20         2001:0:0:0::5

# FIG. 4

| MH #1 | ACTIVE | REST | AWAY |
|---|---|---|---|
| MH #2 | ACTIVE | REST | AWAY |
| MH #3 | ACTIVE | REST | AWAY |

| MH #1 | ACTIVE | REST |
|---|---|---|
| MH #2 | ACTIVE | REST |
| MH #3 | ACTIVE | REST |

(a) NATIVE MH STATUS TABLE          (b) VISIT MH STATUS TABLE

# FIG. 5

INTERNET

DOMAIN NO. 2000::1000:?:?:?/52

ROUTING TABLE

GR

EP 1 395 001 B1

LEGEND

GR = GATEWAY ROUTER
SDR = SUB-DOMAIN ROUTER
AR = ACCESS ROUTER

SD No. 2000::1080:?:?:?:?/57

2000::1180:?:?:?:?/57

2000::1100:?:?:?:?/57

SDR

SDR

SDR

ROUTING TABLE

2000::1101:?:?:?:?/64

2000::1081:?:?:?:?/64

AR  AR  AR    AR  AR  AR    AR  AR  AR

MOBILE USER
2000::1183:?:?:?:1

O MOBILE USER
2000::1082:?:?:?:D1

# FIG. 6

EP 1 395 001 B1

# FIG. 7

```
                          ┌─────────┐
                          │  START  │
                          └────┬────┘
                               ↓
                          ┌─────────────┐
                          │   MH SENDS   │
                          │ PACKET TO AR │
                          └──────┬───────┘
                                 ↓
                     ╱────────────╲        ┌──────────╲     NO    ┌───────────┐
                    ╱      AR       ╲  YES ╱  MH AWAY   ╲─────────→│  DELIVER  │────→ ( END )
                    ╲ PREFIX MATCH  ╱─────→╲     ?      ╱          │ DIRECTLY  │
                     ╲     ?       ╱        ╲──────────╱           └───────────┘
                      ╲───────────╱              │ YES
                           │ NO                  │
                           ↓                     ↓
                     ┌───────────┐              
                     │ SEND TO SDR│←────────────┘
                     └─────┬─────┘
                           ↓
   ( END )          ╱─────────────╲      ┌────────╲    NO    ┌──────────┐    ┌──────────────┐
     ↑             ╱      SDR       ╲ YES ╱   MH    ╲────────→│  SEND TO │───→│  AR, PROCESS │
┌──────────────┐  ╲ PREFIX MATCH   ╱────→╲ ON VISIT ╱        │  HOME AR │    │   AS USUAL   │
│ SDR, PROCESS │  ╲      ?        ╱        ╲   ?    ╱         └──────────┘    └──────────────┘
│   AS USUAL   │   ╲─────────────╱          ╲──────╱
└──────┬───────┘         │ NO                  │ YES
       ↑                 ↓                     ↓
┌──────────────┐   ┌──────────┐         ┌──────────────┐
│  SEND TO THE │   │ SEND TO GR│  ← OR ─ │  SEND TO THE │
│  VISITED SDR │   └─────┬────┘         │  VISITED AR  │
└──────┬───────┘         ↓              └──────┬───────┘
       ↑ YES       ╱───────────╲               ↓
                  ╱     GR       ╲        ┌──────────────┐
┌──────────┐  NO ╱ PREFIX MATCH  ╲  YES   │  AR, PROCESS │
│ SEND TO  │←───╱ MH   ?         ╲←──────│   AS USUAL   │
│ HOME SDR │   ╲ ON VISIT       ╱        └──────────────┘
└────┬─────┘    ╲    ?         ╱
     ↓           ╲───────────╱
┌──────────────┐      │ NO
│ SDR, PROCESS │      ↓
│   AS USUAL   │  ┌──────────────┐
└──────┬───────┘  │  SEND TO THE │
       ↓          │   INTERNET   │
    ( END )       └──────┬───────┘
                         ↓
                      ( END )
```

EP 1 395 001 B1